# EUROPÄISCHE PATENTANMELDUNG

(11) **EP 1 577 722 A1**
(43) Veröffentlichungstag der Anmeldung: **21.09.2005**
(21) Anmeldenummer: 04030750.6
(22) Anmeldetag: 24.12.2004
(51) Int. Cl.: G05B 15/02

(54) **Steuersystem**

(30) Priorität: 18.03.2004 DE 102004013344
(71) Anmelder: Insta Elektro GmbH, 58511 Lüdenscheid (DE)
(72) Erfinder: Ganskow, Jürgen, Dipl.-Ing., 58093 Hagen (DE); Cruciger, Claus, Dipl.-Ing., 58119 Hagen (DE)

(57) **Zusammenfassung**

Es wird ein Steuersystem der Gebäudesystemtechnik vorgeschlagen, welches hauptsächlich aus einem mobilen Steuergerät (6), mehreren an ein Bussystem (3) angeschlossenen Teilnehmern (5) und einer Gatewayeinheit (4) besteht. Zu dem Zweck, ein Steuersystem zu schaffen, bei dem zumindest die Beeinflussung von Hauptfunktionen auf komfortable und einfache Art und Weise direkt auch über die Gatewayeinheit erfolgen kann, weist die Gatewayeinheit eine Anzeigeeinrichtung (7) und zumindest ein Betätigungselement (8) auf, über das zum Funktionsabgleich zwischen einem mobilen Steuergerät (6) und den Teilnehmern der Gebäudeinstallation, sowohl eine Abgleichstufe, als auch zur direkten Beeinflussung bestimmter Teilnehmer der Gebäudeinstallation eine Direktschaltstufe beeinflussbar ist.

## Beschreibung

Die vorliegende Erfindung geht von einem gemäß Oberbegriff des Hauptanspruches konzipierten Steuersystem aus.

Derartige Steuersysteme sind in der Regel dafür vorgesehen, innerhalb von Gebäuden eine Vielzahl von Teilnehmern, wie z. B. Schaltgeräte, Sensoren, Aktoren usw. der Gebäudeinstallation zu beeinflussen. In der Regel ist dazu in den Gebäuden eine Gebäudeinstallation vorhanden, die mit einem Bussystem ausgestattet ist. Ein mobiles Steuergerät mit einer entsprechend strukturierten Benutzeroberfläche ermöglicht eine einfache und komfortable Beeinflussung der zur Gebäudeinstallation gehörigen Teilnehmer. So können über das mobile Steuergerät gegebenenfalls in mehreren Räumen eines Gebäudes z. B. die Beleuchtung, die Heizung, die Jalousien usw. wunschgerecht auf komfortable Art und Weise beeinflusst werden.

Ein dem Oberbegriff des Hauptanspruches entsprechendes Steuersystem durch den Artikel "Vernetzung: Das kommunizierende Hausgerät auf dem Vormarsch" VDI Nachrichten 20.02.2004 Nr. 8 bekannt geworden. Bei diesem Steuersystem der Gebäudesystemtechnik ist ein mobiles Steuergerät vorgesehen, welches die vom Benutzer abgerufenen Steuerbefehle zur wunschgerechten Beeinflussung mehrerer, an eine Gebäudeinstallation angeschlossener Teilnehmer über eine Gatewayeinheit auf ein zur Gebäudeinstallation gehöriges Bussystem überträgt. Sollte jedoch bei diesem bekannten Steuersystem das mobile Steuergerät funktionsuntüchtig bzw. gerade nicht greifbar sein, ist selbst die Beeinflussung von Hauptfunktionen (z. B. das Einschalten der Beleuchtung) der Gebäudeinstallation nicht mehr, nicht mehr zeitnah bzw. nur mit erhöhtem Aufwand möglich.

Der vorliegenden Erfindung liegt deshalb die Aufgabe zugrunde, ein Steuersystem zu schaffen, bei dem zumindest die Beeinflussung von Hauptfunktionen auf komfortable und einfache Art und Weise direkt auch über die Gatewayeinheit erfolgen kann.

Diese Aufgabe wird durch die im Hauptanspruch angegebenen Merkmale gelöst. Bei einem solchermaßen ausgebildeten Steuersystem ist besonders vorteilhaft, dass sich die Gatewayeinheit ohne zusätzlichen Aufwand wie ein normales Schaltgerät in die Gebäudeinstallation integrieren lässt, so dass eine gezielte Beeinflussung bestimmter Hauptfunktionen, wie z. B. das Einschalten der Beleuchtung jederzeit auch ohne das mobile Steuergerät erfolgen kann. Die Gatewayeinheit lässt sich Vorteilhafterweise wie ein Schaltgerät an der Wand eines Raumes bzw. mehrerer Räume des Gebäudes installieren.

Weitere vorteilhafte Ausgestaltungen des erfindungsgemäßen Gegenstandes sind in den Unteransprüchen angegeben. Anhand eines Ausführungsbeispieles sei der erfindungsgemäße Gegenstand näher beschrieben, dabei zeigen:
- Fig. 1:: prinziphaft den Aufbau eines solchen Steuersystems der Gebäudesystemtechnik;
- Fig. 2:: prinziphaft den mechanischen Aufbau einer Gatewayeinheit.

Wie aus den Figuren hervorgeht, besteht ein solches Steuersystem der Gebäudesystemtechnik hauptsächlich aus einem mobilen Steuergerät 1, welches über eine Funkverbindung 2 Informationen mit einer an ein Bussystem 3 der Gebäudeinstallation angeschlossenen Gatewayeinheit 4 austauscht.

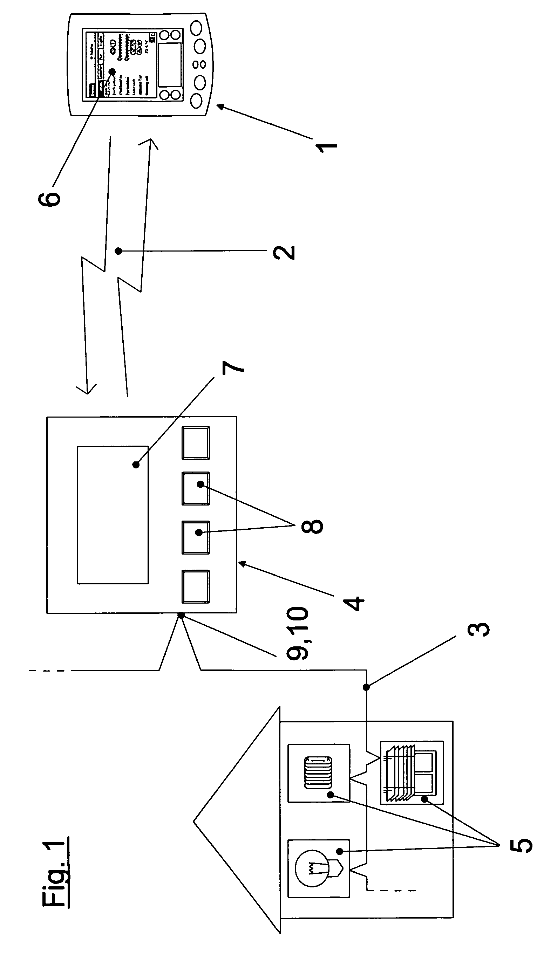

Wie insbesondere aus Fig. 1 hervorgeht, ist das mobile Steuergerät 1 als sogenannter Handheldcomputer ausgeführt. Die Funkverbindung 2 ist nach dem Bluetooth Standard aufgebaut, so dass über kürzere Entfernungen problemlos Informationen zwischen dem mobilen Steuergerät 1 und der Gatewayeinheit 4 bzw. den an die Gebäudeinstallation angeschlossenen Teilnehmern 5 ausgetauscht werden können. Das mobile Steuergerät 1 ist mit einer speziell auf die Funktionalitäten der Gebäudeinstallation abgestimmten Benutzeroberfläche 6 ausgerüstet, so dass eine Inbetriebnahme, Überwachung, Steuerung und Regelung der Gebäudeinstallation bzw. der über das Bussystem 3 an die Gebäudeinstallation angeschlossenen Teilnehmern 5 auf besonders einfache und komfortable Art und Weise möglich ist. Als Teilnehmer 5 der Gebäudeinstallation können unterschiedliche Geräte, Aktoren, Sensoren usw. Verwendung finden. So ist z. B. das Ein- und Ausschalten bzw. Dimmen von Beleuchtungseinrichtungen, das Abrufen von Lichtszenen für Beleuchtungseinrichtungen, das Rauf- und Runterfahren von Jalousien, gegebenenfalls auch in Abhängigkeit der Messungen von Wind- und/oder Umgebungslichtsensoren, die Regelung der Temperatur der Heizungs- bzw. Klimaanlage usw. problemlos über das mobile Steuergerät 1 möglich. Auch kann der Benutzer am mobilen Steuergerät 1 auf einfache Art und Weise Statusinformationen angeschlossener Teilnehmer abrufen, wie z. B. ist die Heizung eingeschaltet, welche Raumtemperatur ist eingestellt, ist die Tiefkühltruhe in Funktion usw. Über einen gegebenenfalls vorhandenen Internetzugang sind die vorbeschriebenen Funktionalitäten bzw. Informationen auch von unterwegs ausführbar bzw. abrufbar.

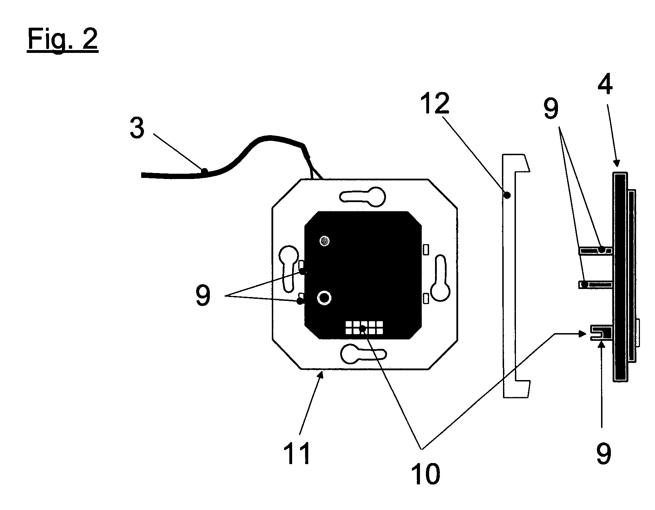

Wie weiter insbesondere aus Fig. 1 hervorgeht, weist die Gatewayeinheit 4 eine Anzeigeeinrichtung 7 und vier unterhalb der Anzeigeeinrichtung 7 in einer Reihe angeordnete Betätigungselemente 8 auf. Die Betätigungselemente 8 sind jeweils als Drucktaster ausgebildet. Wie insbesondere aus Fig. 2 hervorgeht, ist das Oberteil der Gatewayeinheit über eine normierte mechanische Schnittstelle 9 und elektrische Schnittstelle 10 auf einen zur Gatewayeinheit 4 gehörigen, an das Bussystem 3 angeschlossenen Busankoppler 11 aufsetzbar. Das Oberteil der Gatewayeinheit 4 weist eine auf die üblichen Abmessungen von Abdeckungen 12 der Gebäudeinstallation abgestimmte Außenkontur auf. So lässt sich die Gatewayeinheit 4 problemlos in verschiedene Abdeckprogramme integrieren.

Ein einziges Gateway 4 kann bis zu acht mobile Steuergeräte 1 verwalten, umgekehrt kann ein einziges mobiles Steuergerät 1 sieben Gateways 4 ansprechen. Beim Aufbau einer Verbindung zwischen dem jeweiligen Gateway 4 und dem jeweiligen mobilen Steuergerät 1 ist jedoch jeweils nur eine einzige Verbindung aktiv. Zur Konfiguration eines Gateways 4 bezüglich der vorhandenen Gebäudeinstallation bzw. Teilinstallation weist jedes Gateway 4 eine als LCD-Display ausgebildete Anzeigeeinrichtung 7 und vier als Drucktasten ausgebildete Betätigungselemente 8 sowie eine -der Einfachheit halber nicht näher dargestellte- Abgleichstufe auf. Die Anzeigeeinrichtung 7, die Betätigungselemente 8 sowie die Abgleichstufe, dienen im Abgleichmodus der Gatewayeinheit 4 dem Einlernen und Verwalten der jeweils zugehörigen Gebäudeinstallation bzw. Teilinstallation mit ihren angeschlossenen Teilnehmern 5. Die anwendungsbezogenen Informationen der Gebäudeinstallation bzw. Teilinstallation werden dann jeweils in der zugehörigen Gatewayeinheit 4 gespeichert und werden bei der Herstellung einer Funkverbindung 2 automatisch an das mobile Steuergerät 1 übertragen. Beim Vorhandensein mehrerer Gatewayeinheiten 4 in einer ausgedehnten Gebäudeinstallation kann die Funkverbindung 2 zwischen verschiedenen Gatewayeinheiten 4 gewechselt werden, wobei immer die jeweils notwendigen, aktuellen Informationen bezüglich der zugehörigen Gebäudeinstallation bzw. Teilinstallation automatisch auf das mobile Steuergerät 1 übertragen werden und dann für den Benutzer abrufbar sind. Der zugehörige Aufbau der Benutzeroberfläche 6 des mobilen Steuergerätes 1 hängt also von den in der Abgleichstufe des jeweiligen Gateways 4 gespeicherten Informationen ab und ist somit abhängig von der jeweils zugehörigen Gebäudeinstallation bzw. Teilinstallation mit ihren angeschlossenen Teilnehmern 5. Die Übertragung zwischen jedem Gateway 4 und dem mobilen Steuergerät 1 erfolgt über den Bluetooth Standard im sogenannten "Frequency hopping" Verfahren. Pro Sekunde wird die Frequenz 1.600 mal gewechselt, so dass Störungen durch andere Teilnehmer weitgehend ausgeschlossen sind. Die Übertragung zwischen Gateway 4 und dem mobilen Steuergerät 1 kann verschlüsselt erfolgen, soweit das mobile Steuergerät 1 für eine solche Übertragung ausgelegt ist. Die Reichweite der Funkverbindung 2 beträgt etwa 10 Meter.

Unter Zuhilfenahme der Anzeigeeinrichtung 7, der vier Bedienelemente 8 sowie der - der Einfachheit halber nicht dargestellten- Direktschaltstufe des Gateways 4 kann auch eine direkte Beeinflussung von Funktionen (Hauptfunktionen), wie z. B. das Einschalten der Beleuchtung der jeweils zugehörigen Gebäudeinstallation bzw. Teilinstallation direkt an der zugehörigen Gatewayeinheit 4 vorgenommen werden. Dabei ist im Direktschaltmodus des Gateways 4 z. B. lediglich ein, jeweils für eine bestimmte Hauptfunktion bestimmtes Betätigungselement 8 der Gatewayeinheit 4 zu betätigen, um diese Hauptfunktion auszulösen. Zumindest einem Betätigungselement 8 ist also eine bestimmte Funktion direkt zugeordnet. Zur einfachen Beeinflussung von weiteren Funktionen können die in der Gatewayeinheit 4 gespeicherten Informationen im Direktschaltmodus abgerufen und nach Auswahl einer bestimmten Funktion als Vor-Ort-Bedienung an der Gatewayeinheit 4 genutzt werden. Vorteilhafterweise erfolgt die Installation der Gatewayeinheiten 4 jeweils im Eingangsbereich eines Raumes, damit eine direkte Erreichbarkeit bzw. Bedienung gewährleistet ist. Die Umschaltung der Gatewayeinheit 4 zwischen dem Abgleichmodus und dem Direktschaltmodus erfolgt z. B. durch die gleichzeitige Betätigung der beiden äußeren Betätigungselemente der Gatewayeinheit 4.

Die Bedienung von Teilnehmern durch das mobile Steuergerät 1 erfolgt über die, jeweils auf die Gebäudeinstallation bzw. Teilinstallation automatisch abgestimmte Benutzeroberfläche 6. Dabei lässt sich die Bedienung der Teilnehmer 5 einfach nach Räumen oder Gewerken sortieren. Ein Umschalten zwischen Anzeige, sortiert nach Räumen, Gewerken oder Meldungen ist jederzeit möglich. Auch kann ein bestimmter Raum, wie z. B. Wohnen, Schlafen, Flur, Küche, Bad usw. einfach über die Benutzeroberfläche 6 angewählt werden, wobei dann die einzeln zu beeinflussenden Gewerke bzw. Teilnehmer 5 automatisch aufgelistet sind. Zur Schaffung eindeutiger Strukturen ist Vorteilhafterweise jedem Raum einer Wohnung jeweils eine Gatewayeinheit 4 zuzuordnen.

## Patentansprüche

1. Steuersystem der Gebäudesystemtechnik mit einem Steuergerät, welches die vom Benutzer abgerufenen Steuerbefehle zur wunschgerechten Beeinflussung mehrerer von, an eine Gebäudeinstallation angeschlossenen Teilnehmern über eine Gatewayeinheit auf ein zur Gebäudeinstallation gehöriges Bussystem überträgt, **dadurch gekennzeichnet, dass** die Gatewayeinheit (4) eine Anzeigeeinrichtung (7) und zumindest ein Betätigungselement (8) aufweist, über das zum Funktionsabgleich zwischen einem mobilen Steuergerät (1) und den Teilnehmern (5) der Gebäudeinstallation sowohl eine Abgleichstufe, als auch zur direkten Beeinflussung bestimmter Teilnehmer der Gebäudeinstallation eine Direktschaltstufe beeinflussbar ist.

2. Steuersystem nach Anspruch 1, **dadurch gekennzeichnet, dass** die Kommunikation zwischen dem mobilen Steuergerät (1) und der Gatewayeinheit (4) über eine Funkverbindung (2) erfolgt.

3. Steuersystem nach Anspruch 1 oder 2, **dadurch gekennzeichnet, dass** das mobile Steuergerät (1) als Handheldcomputer ausgebildet ist.

4. Steuersystem nach einem der Ansprüche 1 bis 3, **dadurch gekennzeichnet, dass** das mobile Steuergerät (1) eine speziell auf die Funktionalitäten der Gebäudeinstallation abgestimmte Benutzeroberfläche (6) aufweist.

5. Steuersystem nach einem der Ansprüche 1 bis 4, **dadurch gekennzeichnet, dass** die Gatewayeinheit (4) mit einer normierten mechanischen und elektrischen Schnittstelle (9, 10) zum Anschluss an das Bussystem (3) der Gebäudeinstallation versehen ist.

6. Steuersystem nach einem der Ansprüche 1 bis 5, **dadurch gekennzeichnet, dass** das Bussystem (3) zum Anschluss der Gatewayeinheit (4) einen üblicherweise bei Gebäudeinstallationen zur Verwendung kommenden, zur Unterputzmontage vorgesehenen Busankoppler (11) aufweist.

7. Steuersystem nach einem der Ansprüche 1 bis 6, **dadurch gekennzeichnet, dass** die Gatewayeinheit (4) vier unterhalb der Anzeigeeinrichtung (7) angeordnete Betätigungselemente (8) aufweist.

8. Steuersystem nach einem der Ansprüche 1 bis 7, **dadurch gekennzeichnet, dass** zumindest ein Betätigungselement (8) der Gatewayeinheit (4) als Drucktaster ausgebildet ist.

9. Steuersystem nach einem der Ansprüche 1 bis 8, **dadurch gekennzeichnet, dass** das Oberteil der Gatewayeinheit (4) eine auf die üblichen Abmessungen von Abdeckungen (12) der Gebäudeinstallation abgestimmte Außenkontur aufweist.
